(19) Europäisches Patentamt
European Patent Office
Office européen des brevets

(11) Publication number: **0 330 411 B1**

# EUROPEAN PATENT SPECIFICATION

(45) Date of publication of patent specification: **26.01.94**

(51) Int. Cl.⁵: **C08K 13/02**, C08L 57/08, //(C08K13/02,3:22,3:18,3:16, 5:00)

(21) Application number: **89301640.2**

(22) Date of filing: **20.02.89**

(54) Flame retardant for halogen-containing vinyl resins.

(30) Priority: **25.02.88 JP 42640/88**

(43) Date of publication of application:
**30.08.89 Bulletin 89/35**

(45) Publication of the grant of the patent:
**26.01.94 Bulletin 94/04**

(84) Designated Contracting States:
**BE DE ES FR GB IT NL SE**

(56) References cited:
**US-A- 4 608 198**

(73) Proprietor: **NISSAN CHEMICAL INDUSTRIES, LIMITED**
**7-1, Kanda-Nishiki-cho 3-chome Chiyoda-ku Tokyo 101(JP)**

(72) Inventor: **Watanabe, Yoshitane c/o Central Research Inst.**
**NISSIAN CHEM. IND. LTD.**
**722-1 Tsuboicho**
**Funabashi-shi Chiba-ken(JP)**
Inventor: **Suzuki, Keitaro c/o Central Research Inst.**

**NISSIAN CHEM. IND. LTD.**
**722-1 Tsuboicho**
**Funabashi-shi Chiba-ken(JP)**
Inventor: **Shishido, Kouji c/o Central Research Inst.**
**NISSIAN CHEM. IND. LTD.**
**722-1 Tsuboicho**
**Funabashi-shi Chiba-ken(JP)**
Inventor: **Teranishi, Masayuki c/o Central Research Inst.**
**NISSIAN CHEM. IND. LTD.**
**722-1 Tsuboicho**
**Funabashi-shi Chiba-ken(JP)**
Inventor: **Shindo, Masuo c/o Polymer Research Laboratory**
**Nissian Chem. Ind. Ltd, 11-1, Goi-minamikaigan**
**Ichihara-shi Chiba-ken(JP)**

(74) Representative: **Brock, Peter William et al**
**UROUHART-DYKES & LORD**
**91 Wimpole Street**
**London W1M 8AH (GB)**

EP 0 330 411 B1

**Description**

This invention relates to a flame retardant for halogen-containing vinyl resins in which antimony pentoxide is contained as a main component, more specifically to a flame retardant for halogen-containing vinyl resins in which antimony pentoxide ($Sb_2O_5$) is contained as a main component and which does not impair the transparency of the thermal stability of vinyl chloride resins.

The halogen-containing vinyl resin itself has excellent flame retardancy, but a so-called flexible vinyl chloride resin plasticized with a plasticizer such as dioctyl phthalate and a halogen-containing vinyl resin blended with a combustible resin are easily burnt. With regard to flexible vinyl chloride products such as leathers, hood cloths, wire-covering materials, films and sheets which are widely utilized as interior materials for automobiles, electrical and electronic parts, and architectural materials, or rigid vinyl chloride products blended with a reinforcing material against shock, it is especially essential to give flame resistance.

In order to provide these resins with the flame resistance, a variety of flame retardants have been used. Examples of the flame retardants which are used include inorganic materials such as antimony trioxide ($Sb_2O_3$), sodium antimonate, aluminum hydroxide, zirconium oxide, zinc borate and borax as well as organic materials such as tricresyl phosphate, trichloroethyl phosphate and chlorinated paraffins. Further, organic flame retardants containing bromine are also employed in rare cases. These flame retardants mentioned above have some advantages and disadvantages from the viewpoints of flame-resisting effect, transparency, thermal stability, weather resistance, cold resistance, bleed/bloom resistance and the like.

Antimony trioxide displays an extremely great opacifying effect, since it generally has a particle diameter of 0.5 to 10 $\mu$m or so, a large refractive index and a small light transmittance. Therefore, the transparency which is the greatest feature of the halogen-containing vinyl resin will be completely lost, if the above-mentioned antimony trioxide is mixed with the resin. Further, when a pigment is added to the vinyl resin containing the antimony trioxide with the intention of coloring, a great deal of the pigment is required because of this opacifying effect, and kinds of obtainable colors are disadvantageously limited. In order to overcome these drawbacks, it has been suggested to excessively lessen the particle diameter of the antimony trioxide (Japanese Patent Publication No. 7170/1971) and to conversely increase the particle diameter by the single crystallization. Both of them contemplate improving the light transmittance. In the case of the former above, the transparency can remarkably be enhanced, but if the pigment is added, the opacifying function will be heightened, the thermal stability also will become poor, and a manufacturing cost will rise. In the case of the latter above, the sufficient transparency cannot be obtained.

Inorganic materials such as aluminum hydroxide, zirconium oxide, zinc borate and borax are poorer in the flame-resisting effect than antimony trioxide, and have the behavior of losing the transparency of the resin like the antimony trioxide. A phosphorous plasticizer such as tricresyl phosphate and a chlorinated paraffin which have no behaviour of losing the transparency but which have a plasticizing action are poorer in the flame-resisting effect than the antimony trioxide, therefore they must be added in greater amounts. As a result, the bleed will tend to occur and the cold resistance will deteriorate.

Antimony pentoxide is a flame retardant which is applicable to the halogen-containing vinyl resin which does not cause transparency of the resin to be lost (Journal Coated Fabric, Vol. 11, 1982, p. 137). This flame retardant is antimony pentoxide tetrahydrate which is prepared by bringing an antimony pentoxide sol (its particle diameter ranges from 20 x $10^{-3}$ to 100 x $10^{-3}$ $\mu$m) into a powdery form with the aid of spray drying or the like. As for this antimony pentoxide tetrahydrate, a refractive index is small and primary particles are extremely fine. Therefore, the antimony pentoxide tetrahydrate has a great light transmittance, which fact indicates that the transparency of the resin is very good. This antimony pentoxide, however, has a drawback of worsening the thermal stability of the resin.

For the purpose of eliminating this drawback, it has been suggested to make use of a Ba-Cd-Zn stabilizer or a tin mercaptide stabilizer. However, these stabilizers cannot be practically used, because of the formation of harmful cadmium and the bleed/bloom in the case of the Ba-Cd-Zn stabilizer, and because of a bad weather resistance in the case of the tin mercaptide stabilizer.

The present inventors have considered that the above problems would be caused that antimony pentoxide which is obtained by subjecting antimony pentoxide sol to spray drying has strong cation exchangeability and it takes a metal which is to be used as a stabilizer for the halogen-containing vinyl resin in the antimony pentoxide particles so that thermal stability of the halogen-containing vinyl resin becomes bad and practical application becomes impossible. Thus, the present inventors have proposed an antimony pentoxide type flame retardant which can be overcome the above problems in Japanese Provisional Patent Publication No. 58453/1985 (which corresponds to U.S. Patent No. 4,608,198).

That is, the above problems, particularly thermal stability can be greatly improved by antimony pentoxide containing an alkali metal, an alkaline earth metal and/or zinc, lead, and further an organic acid, a

EP 0 330 411 B1

phosphoric acid and/or alkali phosphate.

However, in the improved antimony pentoxide type flame retardant, if an added amount is increased to improve flame retardancy, it can be clarified that it has a tendency that transparency, thermal stability and whether resistance are lowered.

In recent years, accompanying deversification of demand for the halogen-containing vinyl resin, a demand for the flame retardant halogen-containing vinyl resin having excellent transparency and coloration has becoming increased more and more.

The present inventors have conducted intensive studies to respond to such a demand and to provide an antimony pentoxide type flame retardant which is more excellent in transparency as well as no deterioration in various properties such as thermal stability and whether resistance.

Since the surface of antimony pentoxide colloid is acidic, it has a property to strongly bound with an organic base such as an amine, etc., so that by combining a hydrophobic amine, the antimony pentoxide colloid becomes hydrophobic. This hydrophobic antimony pentoxide colloid is dispersed in a plasticizer such as dioctyl phthalate (DOP) extremely well. Accordingly, the present inventors have considered that a flame retardant obtained by making sealing the ion exchangeability of the antimony pentoxide and making the antimony pentoxide colloid to hydrophobic can be dispersed in the halogen-containing vinyl resin in the form of colloid extremely uniformly whereby the halogen-containing vinyl resin can be made highly transparent to accomplish the present invention.

That is, the present inventors have found that a powder obtained by adding a hydroxide of an alkali metal and a perchloric acid compound to the antimony pentoxide colloid, then adding a hydrophobic amine to the resultant mixture to obtain a slurry in which colloid particles of the antimony pentoxide are made hydrophobic and drying said slurry, when used as the flame retardant for a halogen containing resin, can give remarkably excellent transparency, and can improve surprisingly thermal stability, thermal aging characteristic, initial coloration and weather resistance.

The present invention relates to a powdery flame retardant for halogen-containing vinyl resins, containing a dried antimony pentoxide sol having the formula $Sb_2O_5$ $(Na_2O)x.nH_2O$ wherein x is 0 to 0.4 and n is 2 to 4, which has primary particle sizes of 5-100 nm, characterised in further containing, with respect to 100 parts by weight $Sb_2O_5$:

- (A) 5 to 30 parts by weight of at least one compound of lithium, sodium or potassium, calculated as oxide $M_2O$ wherein M represents the alkali metal, or of a mixture thereof with a soluble hydroxide of an alkaline earth metal and zinc, lead or a salt of zinc or lead;
- (B) 0.2 to 10 parts by weight of a perchloric acid compound; and
- (C) 1 to 50 parts by weight of a hydrophobic dispersing agent having a boiling point or decomposition temperature of at least 200°C.

The antimony pentoxide sol to be used in the present invention is an antimony pentoxide sol with primary particle sizes of 5 to $100 \times 10^{-3}$ $\mu$m which is prepared by the method of reacting antimony trioxide with potassium hydroxide to obtain potassium antimonate and then deionizing it (Japanese Patent Publication No. 11848/1982 which corresponds to U.S. RE 031,214), the method of deionizing alkali antimonate with an ion exchange resin (U.S. Patent No. 4,110,247), the method of reacting an alkali antimonate with an inorganic acid and then peptizing the reaction product (Japanese Provisional Patent Publication No. 41536/1985 which corresponds to U.S. Patent No. 4,589,997, and Japanese Provisional Patent Publication No. 227918/1986), etc. The antimony pentoxide sol prepared by these methods can be expressed as $Sb_2O_5(Na_2O)_x.nH_2O$, and generally x is 0 to 0.4 and n is 2 to 4.

As the alkali metal compound which is the component (A) of the flame retardant of the present invention, hydroxides or salts of at least one alkali metal selected from lithium, sodium and potassium may be included. However, when chlorides are used among salts, anions such as chloride ions must be removed by washing, and therefore hydroxides or carbonates of alkali metals are preferred. Particularly, sodium hydroxide and sodium carbonate are preferred.

The amount of the above alkali metal compound added may be preferably 0.6 to 1.2 in terms of $M_2O/Sb_2O_5$ molar ratio, 5 to 30 parts by weight as $M_2O$ (M = Li, Na or K) based on 100 parts by weight of antimony pentoxide ($Sb_2O_5$). With an amount less than 5 parts by weight, cation exchange capacity cannot be sufficiently blocked to give no preferably flame retardant agent. On the other hand, although the effect can be obtained with an amount exceeding 30 parts by weight, the alkali will remain if the amount exceeds that amount, whereby the composition becomes strongly alkaline and can be handled with difficulty.

Also, a part of the alkali metal compound can be changed to a soluble hydroxide of an alkaline earth metal (Mg, Ca, Sr and Ba) and zinc, lead or a salt of zinc or lead. For example, basic zinc carbonate, zinc benzoate or the like can be used. Even if an alkali metal may be added to an antimony pentoxide sol at a $M_2O/Sb_2O_5$ molar ratio of 0.8 or more, the structure of the antimony pentoxide is retained without formation

3

of antimonate salt.

As the perchloric acid compound which is the component (B) of the flame retardant of the present invention, any compound may be available, but it should preferably be added in the form of an aqueous solution. For example, there may be included perchloric acid, sodium perchlorate, potassium perchlorate, amine perchlorate, ammonium perchlorate, magnesium perchlorate, lithium perchlorate, barium perchlorate, strontium perchlorate, lead perchlorate, cesium perchlorate and rubidium perchlorate.

The perchlorate amine may include perchlorates obtained from amines of at least one selected from among aliphatic amines, aromatic amines, aralkylamines, alkanolamines having a boiling point or a decomposition temperature of 200 °C or higher and amine type surfactants with average added moles of ethylene oxide of 1 to 20. As the above aliphatic amines, aliphatic amines having 9 or more carbon atoms such as dodecylamine, tetradecylamine, octadecylamine and the like may be included. As the aromatic amine, diphenylamine, naphthylamine and the like may be included. As the aralkylamine, dibenzylamine, tribenzylamine, phenylethylamine and the like may be included. As the alkanolamine, triethanolamine, diethanolamine and the like may be included. Further, as the amine type surfactant with average added moles of ethylene oxide of 1 to 20, alkylamine ethylene oxide derivatives with added moles of ethylene oxide of 1 to 20 may be included. For example, alkylamine ethylene oxide derivatives with 1-20 preferably 1-5 added moles of ethylene oxide, such as oxyethylene dodecylamine, polyoxyethylene dodecylamine, polyoxyethylene octadecylamine, polyoxyethylene tallow alkylamine, polyoxyethylene tallow alkylpropylenediamine or the like.

The amount of the above perchloric acid compound added may be 0.2 to 10 parts by weight as perchlorate ($ClO_4$) based on 100 parts by weight of antimony pentoxide ($Sb_2O_5$), particularly preferably 2 to 8 parts by weight. With an amount less than 0.2 part by weight, thermal stability, thermal aging characteristics, etc. cannot be sufficiently improved. On the other hand, addition in an amount over 10 parts by weight may be possible, but it is economically meaningless because no further improvement of thermal stability, thermal aging characteristic, can be achieved by addition in such amount or more.

As the hydrophobic dispersing agent having a boiling point or a decomposition temperature of 200 °C or higher which is the component (C) of the flame retardant of the present invention, there may be preferably included hydrophobic amine compounds, higher fatty acids having 12 or more of carbon atoms, and their esters, ethers or amides, and phosphates of ether type nonionic surfactants, etc. Particularly, addition of the hydrophobic amine compound causes improvement in dispersibility of the flame retardant to the halogen-containing vinyl resin and has a tendency of improving in transparency of the composition. Thus, as the hydrophobic dispersing agent, it is preferably used the hydrophobic amine only or in combination of the hydrophobic amine and the other dispersing agent. However, only a hydrophobic dispersing agent other than the above hydrophobic amine may be acceptable.

As the hydrophobic amine compound, there may be included at least one compound selected from among aliphatic amines, aromatic amines, aralkyl amines having a boiling point or decomposition temperature of 200 °C or higher or amine type surfactants with average added moles of ethylene oxide of 1 to 5 similarly as the amines of the perchlorate amines as previously described. Among them, amine type surfactants with average added moles of ethylene oxide of 1 to 5 are preferred. Examples of aliphatic amines, aromatic amines or aralkyl amines having a boiling point or decomposition temperature of 200 °C or higher may include aliphatic amines having 9 or more carbon atoms such as dodecylamine, tetradecylamine, octadecylamine and the like; aromatic amines such as diphenylamine, naphthylamine and the like; aralkyl amines such as dibenzylamine, tribenzylamine, phenylethylamine and the like.

Among these hydrophobic amine compounds, preferred is the amine type surfactant with average added moles Of ethylene oxide of 1 to 5.

If the added moles of ethylene oxide exceed 6, the hydrophobicity of the polyoxyethylene alkylamine becomes smaller, whereby the dispersibility of the flame retardant into the halogen containing resin will be undesirably worsened.

As the hydrophobic dispersing agent of the higher fatty acid having 12 or more of carbon atoms, and their esters, ethers or amides, there may be included sorbitan fatty acid esters such as sorbitan stearete, sorbitan palmitate, sorbitan laurate, sorbitan oleate, sorbitan tristearate, sorbitan behenate, sorbitan sesquioleate, sorbitan trioleate; glycerin aliphatic acid esters such as glycerin oleate, glycerin stearate, glycerin laurate; ethylene bisamide of the higher fatty acids; monoamides of the higher fatty acids,

As the phosphates of the ether type nonionic surfactants, there may be included polyoxyethylene adducts of mono- or dialkyl phosphates, mono- or diaryl phosphates, or mono- or dialkylaryl phosphates (for example, trade name of "GAFAC" produced by Toho Kagaku Co.).

Further, in addition to the above hydrophobic dispersing agents, there may be used a lubricating agent such as a natural wax, a synthetic wax, a paraffin wax having a high melting point; and further used a hydrophobic dispersing agents such as a liquid state epoxidized soybean oil, a silicone oil, dioctylphthalate, and a plasticizer such as phosphoric type plasticizer. However, if an added amound thereof becomes greater, it is not preferred since the resulting powder does not dry.

The amount of the hydrophobic dispersing agent added in the present invention depends on the primary particle size of the antimony pentoide colloid of the antimony pentoxide sol employed, and the amount of the agent required for hydrophobic modification becomes greater as the particle size is maller. It is also different depending on the molecular weight of the agent employed, but may be preferably 1 to 50 parts by weight, particularly 4 to 35 parts by weight, based on 100 parts by weight of antimony pentoxide ($Sb_2O_5$). If the amount exceeds 50 parts by weight, there is no more improvement effect of dispersibility as economically meaningless. In the case that only the hydrophobic amine is used, if it exceeds 50 parts by weight, such drawback may emerge that due to the presence of excessive amine, it may be attached in greater amount onto rolls during kneading into a halogen-containing vinyl resin or that the physical properties such as weathering resistance, of the halogen-containing vinyl resin obtained may be worsened. On the other hand, with an amount of 1 part by weight or less, dispersibility into a halogen-containing vinyl resin becomes poor, whereby no good transparency can be obtained.

In the present invention, the order of adding the hydrophobic dispersing agent, the alkali metal compound and the perchloric acid compound is not particularly limited. They may be also added at the same time. If the perchloric acid compound is added before addition of the hydrophobic dispersing agent and the alkali metal compound, the cations are incorporated in the antimony pentoxide colloid particles to become perchloric acid, which exhibit strong acidity. Therefore, it should preferably be added after addition of the alkali metal compound.

In the present invention, addition of the hydrophobic dispersing agent, the alkali metal compound and the perchlorate compound as described above into the antimony pentoxide sol and stirring can be practiced at room temperature to 100 °C.

Addition of the hydrophobic dispersing agent other than the hydrophobic amine may preferably be carried out at 50 to 100 °C. When mixing these dispersing agents, in order to mix them uniformly, if desired, it is preferred that a hydrophilic organic solvent including lower alcohols such as methanol, ethanol, isopropanol, n-propanol, or methyl cellosolve, is added thereto.

The product obtained by adding the alkali metal compound, the perchloric acid compound and the hydrophobic dispersing agent, to the antimony pentoxide sol as described above is formed in a slurry. In said slurry, antimony pentoxide forms a hydrophobic agglomerate, and water layer becomes separated when the slurry is left to stand. By separating and drying the solid from the slurry obtained, the powdery flame retardant of the present invention is obtained. As the method, those conventionally practiced can be applied.

More specifically, said slurry may be dried as such by a spray dryer, a drum dryer, a freeze dryer, to form powder. The drying temperature in this case is not particularly limited, but it may be such that free water can be removed within the range wherein the product temperature does not exceed around 200 °C at the maximum. As another method, said slurry may be filtered through a filter press, a centrifugal filter, aspiration filter, and the wet cake may be dried by a hot air dryer, a vacuum dryer. After such drying, the dried product may be crushed into powder, if desired.

Also, the powder obtained by spray dryer, may be crushed into more fine powder, if desired.

The flame retardant of the present invention thus obtained has particle sizes ranging from 0.2 to 40 $\mu$m. Since the flame retardant of the present invention can be very readily crushed, it has the specific feature of being readily crushed even when mixed with a halogen containing resin by means of a ribbon mixer, Henschel mixer. Besides, since it also exhibits good dispersibility into a plasticizer during hot roll kneading, the desired transparency, flame retardancy, can be also obtained even when powder with sizes over 40 $\mu$m are employed.

The thus obtained flame retardant of this invention is blended with a halogen-containing vinyl resin, a plasticizer such as dioctyl phthalate (DOP), a Ba-Zn series stabilizer or the like and an additive such as an epoxidized soybean oil in a known procedure. For example, a halogen-containing vinyl resin, a powdery stabilizer and a flame retardant are mixed; a liquid stabilizer and DOP in which an epoxidized soybean oil has already been dissolved are added thereto while stirring is carried out by a Henschel mixer; and the mixing is continued till a temperature of 105 to 115 °C is reached. In this case, an amount of the flame retardant is within the range of 0.5 to 20 parts by weight relative to 100 parts by weight of the halogen-containing vinyl resin.

The powdery flame retardant of the present invention containing an amine as the hydrophobic dispersing agent also has the property of becoming an organosol through peptization when it is added into a hydrophobic organic solvent. Since the powdery flame retardant of the present invention can be added into a phthalic acid diester, which is used as the plasticizer of a halogen containing vinyl resin to be dispersed as a sol, a plasticizer containing previously the flame retardant of the present invention in the sol state may be also used.

In the present invention, the halogen-containing vinyl resins mean a vinyl chloride resin and its copolymers. The copolymers of the vinyl chloride resin include the copolymers with ethylene, propylene, vinylidene chloride, vinyl acetate, vinyl alcohol, acrylic ester, methacrylic ester, styrene, acrylonitrile and the like. Further, the aforesaid copolymers include the graft copolymers with polystyrene-vinyl acetate, polyester, polyurethane and polystyrene. In the present invention, the copolymers can be defined as polymers including two or more monomers.

The flame retardant of the present invention was mixed with a halogen containing vinyl resin, a plasticizer and a Ba-Zn stabilizer by a Henschel mixer, and then a masticated sheet with a thickess of 0.7 to 0.8 mm was prepared on two rolls of 170 °C, and further the thermal stability of the sheet was tested by the gear oven method.

As the result, the flame retardant was surprisingly found to show no abnormality in spite of a large amount of a hydrophobic dispersing agent such as a hydrophobic amine added, and also the sheet obtained had a vary excellent thermal stability.

Further, the transparency of the sheet obtained by pressing of the above kneaded sheet was remarkably good and transparency was almost equal to that when no flame retardant is added at lower levels of the flame retardant. While the transparency in the case of the flame retardant disclosed in Japanese Provisional Patent Publication No. 58453/1986 already proposed by the present inventors (the evaluation method is the same as that described below) was 33 to 48 % as described in Examples in the same published specification, the transparency is enhanced to about 2-fold as 62 to 87 % as described in Examples in the case of the flame retardant of the present invention.

The flame retardant of the present invention also exhibited very good results in the thermal aging test, the initial coloration characteristic and the weathering resistance test as shown in the evaluation tests in the following Examples.

Thus, the flame retardant of the present invention does not impair transparency of the halogen containing vinyl resin, and also has the effect of not worsening thermal stability, thermal aging characteristic, initial coloration characteristic and weathering resistance.

## EXAMPLES

The present invention is described in more detail by referring to Examples and Comparative examples, by which the present invention is not limited at all. The flame retardants obtained in Examples and Comparative examples were formulated as shown in Table 1, and evaluated according to the evaluation methods as described below. The results are shown in Table 3.

The "%" of the composition in Examples and Comparative examples is shown by "% by weight". First, the evaluation methods of the flame retardant are to be described.

(Method for evaluation of flame retardant)

Thermal stability (blackening time): The test strip was prepared by mixing the components according to the recipe A shown in Table 1, kneading the mixture by two rolls at 170 °C for 3 minutes to form a sheet with a thickness of 0.7 to 0.8 mm, and the time before reaching blackening at an oven temperature of 185 °C was measured.

Initial coloring characteristic (YI value): The test strip was prepared by mixing the components according to the recipe A shown in Table 1, kneading the mixture by two rolles at 165 °C for 3 minutes, and then pressing the kneaded product at 180 °C into a press sheet with a thickness of 1 mm. The color difference of the press sheet with reflected light was measured, and the coloration characteristic was shown by YI value (yellow value).

Transparency: The test strip was prepared by forming a press sheet with a thickness of 1 mm according to the formulation recipe B in Table 1 by the same method as in the above test, and transmittance (L value) of the light transmitting through the press sheet was measured.

Bleeding characteristic: The test strip was prepared by forming a press sheet with a thickness of 1 mm according to the same method as in testing the initial coloration characteristic, and whether liquid is bleeded out on the sheet surface or not when the press sheet was left to stand in an atmosphere of 80 °C and a humidity of 99 % for 7 days was observed with eyes was measured.

Standards for judgement:

○ : no bleeding, △: slight bleeding present,
X: bleeding present.

Thermal aging characteristic: The test strip was prepared by forming a press sheet of 0.5 mm according to the formulation recipe C shown in Table 1 by the same method as in the initial coloration characteristic test, and the residual tensile elongation was determined after suspending the test in an oven of 120 °C for 400 hours.

Weathering resistance: The test strip was prepared by forming a film of 0.2 mm according to the recipe C shown in Table 1 by the same method as in the thermal stability test, and the residual tensile elongation after irradiation with QUV for 250 hours was determined.

QUV: DPWL-5R Model (Produced by Suga Shikenki K.K.)

Irradiation luminance: 3.5 mW/cm$^2$

Black panel temperature: 60 °C

Temperature when wet: 50 °C

Flame retardancy: The test strip was prepared by forming a press sheet of 0.45 mm according to the recipe B shown in Table 1 by the saame method as in the initial coloration characteristic test, and the horizontal combustion speed was measured according to the MVSS-302 method.

Oxygen index: The test strip was prepared by forming press sheet of 3.2 mm according to the recipe D shown in Table 1 by the same method as in the initial coloration characteristic test, and the measurement was conducted according to JIS K 7201.

Table 1

| Formulation | | A | B | C | D |
|---|---|---|---|---|---|
| PVC (Note 1) | | 100 | 100 | 100 | 100 |
| Plasticizer (Note 2) | | 60 | 60 | 60 | 50 |
| Stabilizer | Liquid Ba-Zn Ac-190 (Note 3) | 1.2 | - | 1.2 | 1.2 |
| | Liquid Ba-Zn AP-550 (Note 4) | 0.4 | - | 0.4 | 0.4 |
| | Liquid Ba-Zn LTL-257K (Note 5) | - | 1.5 | - | - |
| | Liquid Ba-Zn BP-58AW (Note 6) | - | 1.0 | - | - |
| | Epoxidized soybean oil O-130P (Note 7) | 1.0 | 1.0 | 1.0 | 1.0 |
| Flame retardant | | 7.0 | 3.0 | 7.0 | 5.0 |

(Note 1): Polymerization degree 1000
(Note 2): dioctyl phthalate except for the recipe C, and phthalic acid ester of alcohols with 9 to 11 carbon atoms (product name: DL-911P (trade name), produced by Shinnippon Rika Co.) for the recipe C.
(Note 3), (Note 4) and (Note 7): Trade names all produced by Adeka-Agurs Co.
(Note 5) and (Note 6): Trade names both produced by Nissan Ferro Organic Chemistry Co.

Example 1

To 977 g of an antimony pentoxide sol ($Sb_2O_5$ 13.1 %, $Na_2O$ 0.98 %, $Na_2O/Sb_2O_5$ molar ratio: 0.39, viscosity: 4.5 c.p. and pH: 1.90) with particle sizes of 20 to 40 x $10^{-3}$ μm as observed by electron microscope obtained according to the method as described in Japanese Provisional Patent Publication No. 227918/1986 was added 8.6 g of 93 % sodium hydroxide, and the mixture was stirred at 85 °C for one hour. After cooled to room temperature, 27.6 g of an aqueous 20 % $NaClO_4$ was added. The mixture was stirred for 30 minutes, and further 16.7 g of a polyoxyethylene dodecylamine with added moles of ethylene oxide of 2 (trade name: Naimine L-202, produced by Nippon Oil & Fats Co., Ltd.) was added, followed by stirring of the mixture for 35 minutes. In the resultant slurry, antimony pentoxide was found to form a hydrophobic agglomerate, and slurry was separated into aqueous layer and antimony pentoxide containing layer when left to stand. The slurry had a pH of 7.8 and a viscosity of 320 c.p.

The slurry was uniformized under stirring and dried by a spray dryer to obtain a powdery flame retardant.

The flame retardant was found to have a composition of antimony pentoxide ($Sb_2O_5$) 68.1 %, $Na_2O$ 9.14 %, perchloric acid ($ClO_4$) 2.38 %, polyoxyethylene dodecylamine 8.85 % and water (including crystal water) 11.53 %.

The flame retardant was found to contain 13.4 parts of $Na_2O$, 13.0 parts by weight of polyoxyethylene dodecylamine and 3.5 parts by weight of perchloric acid as $ClO_4$ based on 100 parts by weight of $Sb_2O_5$.

The flame retardant obtained had an average particle size of 11.6 $\mu$m. The flame retardant is shown in Table 2, and the evaluation results in Table 3. Water content was measured by differential thermal analysis.

Example 2

To 1500 g of an antimony pentoxide sol prepared by the ion exchange method with the use of sodium antimonate as the starting material (specific gravity: 1.127, pH: 2.5, viscosity: 3.0 c.p., $Sb_2O_5$: 12 %, $Na_2O$: 0.74 %, $Na_2O/Sb_2O_5$ molar ratio: 0.32, particle size: 40 to 60 x $10^{-3}$ $\mu$m) was added 17.9 g of 93 % sodium hydroxide, and the mixture was stirred at 50 °C for one hour. After cooling, 38.8 g of 20 % aqueous $NaClO_4$ was added and, after stirring for 30 minutes, further 14.4 g of the same polyoxyethylene dodecylamine as in Example 1 was added, followed by stirring for 30 minutes.

The resultant slurry was similar to that obtained in Example 1. The slurry had a pH of 8.5 and a viscosity of 300 c.p. The slurry was dried according to the same method as in Example 1 to obtain a powdery flame retardant.

The flame retardant had a composition of antimony pentoxide ($Sb_2O_5$) 70.3 %, $Na_2O$ 10.1 %, perchloric acid ($ClO_4$) 2.46 %, polyoxyethylene dodecylamine 5.63 % and water (including crystal water) 11.51 %. The proportions of the respective formulated materials based on 100 parts of $Sb_2O_5$ are shown in Table 2.

The flame retardant had an average particle size of 15 $\mu$m. The flame retardant was evaluated in the same manner as in Example 1. The results are shown in Table 3.

Further, the flame retardant was crushed in a Pindisk mill to obtain a flame retardant with an average particle size of 3.0 $\mu$m.

Example 3

To 1200 g of an antimony pentoxide sol obtained by the same method as in Example 1 (specific gravity: 1.142, pH: 1.75, viscosity: 5.6 c.p., $Sb_2O_5$ 13.4 %, $Na_2O$ 0.02 %, $Na_2O/Sb_2O_5$ molar ratio: 0.01, and particle size: 5 to 15 x $10^{-3}$ $\mu$m) was added 30.06 g of 93 % sodium hydroxide, and the mixture was stirred at 85 °C for one hour. After cooling, 52.9 g of 20 % aqueous $NaClO_4$ was added and, after stirring for 30 minutes, further 48.24 g of the same polyoxyethylene dodecylamine as in Example 1 was added, followed by stirring for 30 minutes.

The resultant slurry was similar to that obtained in Example 1. The slurry had a pH of 8.7 and a viscosity of 500 c.p. The slurry was dried according to the same method as in Example 1 to obtain a powdery flame retardant.

The flame retardant had a composition of antimony pentoxide ($Sb_2O_5$) 58.4 %, $Na_2O$ 8.95 %, perchloric acid ($ClO_4$) 3.12 %, polyoxyethylene dodecylamine 17.5 % and water (including crystal water) 12.03 %. The proportions of the respective formulated materials based on 100 parts of $Sb_2O_5$ are shown in Table 2.

The flame retardant had an average particle size of 13 $\mu$m. The flame retardant was evaluated in the same manner as in Example 1. The results are shown in Table 3.

Example 4

To 1500 g of an antimony pentoxide sol obtained by the same method as in Example 1 (specific gravity: 1.145, pH: 1.90, viscosity: 4.4 c.p., $Sb_2O_5$ 13.1 %, $Na_2O$ 0.98 %, $Na_2O/Sb_2O_5$ molar ratio: 0.39, and particle size: 20 to 40 x $10^{-3}$ $\mu$m) was added 18.4 g of 93 % sodium hydroxide, and the mixture was stirred at 85 °C for one hour. After cooling, 42.4 g of 20 % aqueous $NaClO_4$ was added and, after stirring for 30 minutes, further 32.4 g of a polyoxyethylene tallow alkylamine with added moles of ethylene oxide of 2 (trade name: Naimine $T_2$-202, produced by Nippon Oil & Fats Co., Ltd.) was added, followed by stirring for 30 minutes.

The resultant slurry was similar to that obtained in Example 1. The slurry had a pH of 9.0 and a viscosity of 360 c.p. The slurry was dried according to the same method as in Example 1 to obtain a powdery flame retardant.

The flame retardant had a composition of antimony pentoxide ($Sb_2O_5$) 65.4 %, $Na_2O$ 10.0 %, perchloric acid ($ClO_4$) 2.29 %, polyoxyethylene tallow alkylamine 10.8 % and water (including crystal water) 11.51 %. The proportions of the respective formulated materials based on 100 parts of $Sb_2O_5$ are shown in Table 2.

The flame retardant had an average particle size of 12 $\mu$m. The flame retardant was evaluated in the same manner as in Example 1. The results are shown in Table 3.

Further, the flame retardant was crushed in a Pindisk mill to obtain a flame retardant with an average particle size of 2.5 $\mu$m.

Example 5

To 1500 g of an antimony pentoxide sol obtained by the same method as in Example 1 (specific gravity: 1.145, pH: 1.90, viscosity: 4.5 c.p., $Sb_2O_5$ 13.1 %, $Na_2O$ 0.88 %, $Na_2O/Sb_2O_5$ molar ratio: 0.35, and particle size: 20 to 40 x $10^{-3}$ $\mu$m) was added 18.4 g of 93 % sodium hydroxide, and the mixture was stirred at 70 °C for one hour. Then, after cooling, 42.4 g of 20 % aqueous $NaClO_4$ was added and, after stirring for 30 minutes, further 25.5 g of the same polyoxyethylene dodecylamine as in Example 1, 11.2 g of sorbitane stearate (trade name: Rikemal S-300, produced by Riken Vitamin Co.), and 8.3 g of isopropanol as the solubilizing agent for the sorbitane stearate were added, followed by stirring for 30 minutes.

The resultant slurry was similar to that obtained in Example 1. The slurry had a pH of 8.9 and a viscosity of 420 c.p. The slurry was dried according to the same method as in Example 1 to obtain a powdery flame retardant.

The flame retardant had a composition of antimony pentoxide ($Sb_2O_5$) 64.8 %, $Na_2O$ 9.44 %, perchloric acid ($ClO_4$) 2.27 %, polyoxyethylene dodecylamine 8.41 %, sorbitane stearate 3.69 % and water (including crystal water) 11.39 %. The proportions of the respective formulated materials based on 100 parts of $Sb_2O_5$ are shown in Table 2.

The flame retardant had an average particle size of 13 $\mu$m. The flame retardant was evaluated in the same manner as in Example 1. The results are shown in Table 3.

Example 6

To 1500 g of the same antimony pentoxide sol as in Example 5 were added 15.3 g of 93 % sodium hydroxide and 16.0 g of potassium hydroxide, and the mixture was stirred at 80 °C for one hour. After cooling, 42.4 g of an aqueous $NaClO_4$ was added and, after stirring for 30 minutes, further 32.4 g of the same polyoxyethylene tallow alkylamine as in Example 4 was added, followed by stirring for 30 minutes.

In the slurry obtained, antimony pentoxide was found to form a hydrophobic agglomerate similarly as in Example 1, and it was a slurry separated into layers when left to stand. The slurry had a pH of 9.2 and a viscosity of 350 c.p. The slurry was dried according to the same method as in Example 1 to obtain a powdery flame retardant.

The flame retardant had a composition of antimony pentoxide ($Sb_2O_5$) 63.4 %, $Na_2O$ 8.50 %, $K_2O$ 3.69 %, perchloric acid ($ClO_4$) 2.22 %, polyoxyethylene tallow alkylamine 10.45 % and water (including crystal water) 11.74 %. The proportions of the respective formulated materials based on 100 parts of $Sb_2O_5$ are shown in Table 2.

The flame retardant had an average particle size of 12 $\mu$m. The flame retardant was evaluated in the same manner as in Example 1. The results are shown in Table 3.

Example 7

To 1000 g of the same antimony pentoxide sol as in Example 1 was added 8.6 g of 93 % sodium hydroxide, and the mixture was stirred at 85 °C for one hour. After cooling to room temperature, 28.2 g of 20 % aqueous $NaClO_4$ was added and, after stirring for 30 minutes, 14.4 g of the same polyoxyethylene dodecylamine as in Example 1 was added, followed by stirring for 35 minutes. To the slurry obtained was further added 13.1 g of anhydrous sodium carbonate, and the mixture was stirred for 30 minutes.

The resultant slurry was similar to that obtained in Example 1. The slurry had a pH of 9.9 and a viscosity of 200 c.p. The slurry was dried according to the same method as in Example 1 to obtain a powdery flame retardant.

The slurry was uniformized under stirring and dried by a spray dryer to obtain a powdery flame retardant.

The flame retardant was found to have a composition of antimony pentoxide ($Sb_2O_5$) 63.5 %, $Na_2O$ 12.17 %, perchloric acid ($ClO_4$) 2.22 %, polyoxyethylene dodecylamine 8.24 % and water (including crystal water) 11.23 %. The proportions of the respective formulated materials based on 100 parts of $Sb_2O_5$ are shown in Table 2.

The flame retardant had an average particle size of 11.6 $\mu$m. The flame retardant was evaluated in the same manner as in Example 1. The results are shown in Table 3.

Example 8

To 1390 g of the same antimony pentoxide sol as in Example 1 was added 18.1 g of 93 % sodium hydroxide, and the mixture was stirred at 85 °C for one hour. After cooling to room temperature, 6.35 g of the same polyoxyethylene dodecylamine with added moles of ethylene oxide of 2 as in Example 1, and further 23.7 g of the perchlorate of polyoxyethylene dodecylamine obtained according to the method as described below, followed by stirring for 35 minutes. In the slurry obtained, antimony pentoxide was found to form a hydrophobic agglomerate, and the slurry was separated into aqueous layer and antimony pentoxide containing layer. The slurry had a pH of 7.8 and a viscosity of 350 c.p.

The slurry was uniformized under stirring and dried by a spray dryer to obtain a powdery flame retardant.

The flame retardant was found to have a composition of antimony pentoxide ($Sb_2O_5$) 68.1 %, $Na_2O$ 9.14 %, perchloric acid ($ClO_4$) 2.38 %, polyoxyethylene dodecylamine 8.85 % and water (including crystal water) 11.53 %. The proportions of the respective formulated materials based on 100 parts of $Sb_2O_5$ are shown in Table 2.

The flame retardant had an average particle size of 11.6 $\mu$m. The flame retardant was evaluated in the same manner as in Example 1. The results are shown in Table 3.

(Method for preparation of perchlorate of polyoxyethylene dodecylamine)

A solution of 75.0 g of the polyoxyethylene dodecylamine with added moles of ethylene oxide of 2 used in Example 1 dissolved in 36 g of isopropanol was neutralized under stirring with addition of an aqueous 60 % perchlorate. Next, the neutralized salt solution was vacuum dried to remove the solvent. A colorless, viscous perchlorate of polyoxyethylene dodecylamine with added moles of 2 was obtained.

Example 9

To 1500 g of an antimony pentoxide sol obtained by the ion exchange method with the use of sodium antimonate as the starting material (specific gravity: 1.127, pH: 2.5, viscosity: 3.0 c.p., $Sb_2O_5$ 12 %, $Na_2O$ 0.74 %, $Na_2O/Sb_2O_5$ molar ratio: 0.32, and particle size: 40 to 60 x $10^{-3}$ $\mu$m) was added 20.6 g of 93 % sodium hydroxide, and the mixture was stirred at 50 °C for one hour. After cooling, 23.4 g of the same perchlorate of polyoxyethylene dodecylamine as in Example 8 was added, followed by stirring for 30 minutes.

The resultant slurry was similar to that obtained in Example 1. The slurry had a pH of 8.5 and a viscosity of 300 c.p.

The slurry was dried according to the same method as in Example 1 to obtain a powdery flame retardant.

The flame retardant had a composition of antimony pentoxide ($Sb_2O_5$) 69.1 %, $Na_2O$ 9.94 %, perchloric acid ($ClO_4$) 2.39 %, polyoxyethylene dodecylamine 6.56 % and water (including crystal water) 11.98 %. The proportions of the respective formulated materials based on 100 parts of $Sb_2O_5$ are shown in Table 2.

The flame retardant had an average particle size of 15 $\mu$m. The flame retardant was evaluated in the same manner as in Example 1. The results are shown in Table 3.

Further, the flame retardant was crushed in a Pindisk mill to obtain a flame retardant with an average particle size of 3.0 $\mu$m.

Example 10

To 1200 g of the same antimony pentoxide sol as in Example 3 was added 33.78 g of 93 % sodium hydroxide, and the mixture was stirred at 85 °C for one hour. After cooling to room temperature, 24.62 g of the same polyoxyethylene dodecylamine with added moles of ethylene oxide of 2 as in Example 1, and further 32.3 g of the same perchlorate of polyoxyethylene dodecylamine as in Example 8 were added, followed by stirring for 30 minutes. The slurry obtained was similar to that in Example 1. The slurry had a pH of 8.7 and a viscosity of 500 c.p.

The slurry was uniformized under stirring and dried by a spray dryer to obtain a powdery flame retardant.

The flame retardant was found to have a composition of antimony pentoxide ($Sb_2O_5$) 58.4 %, $Na_2O$ 8.95 %, perchloric acid ($ClO_4$) 3.12 %, polyoxyethylene dodecylamine 17.5 % and water (including crystal water) 12.0 %. The proportions of the respective formulated materials based on 100 parts of $Sb_2O_5$ are shown in Table 2.

The flame retardant had an average particle size of 13 $\mu$m. The flame retardant was evaluated in the same manner as in Example 1. The results are shown in Table 3.

### Example 11

To 1500 g of an antimony pentoxide sol as in Example 5 was added 21.4 g of 93 % sodium hydroxide, and the mixture was stirred at 70 °C for one hour. After cooling to room temperature, 6.6 g of the same polyoxyethylene dodecylamine as in Example 1, and further 25.9 g of the same perchlorate of polyoxyethylene dodecylamine as in Example 8 were added, followed by stirring for 20 minutes. Then, 11.2 g of glycerin mono-12-hydroxystearate (trade name, Rikemal HC-100, produced by Riken Vitamin Co.) and 8.3 g of isopropanol as the solubilizing agent for the glycerin mono-12-hydroxystearate were added, and the mixture was stirred for 30 minutes.

The resultant slurry was similar to that obtained in Example 1. The slurry had a pH of 8.9 and a viscosity of 420 c.p.

The slurry was dried according to the same method as in Example 1 to obtain a powdery flame retardant.

The flame retardant had a composition of antimony pentoxide ($Sb_2O_5$) 64.8 %, $Na_2O$ 9.44 %, perchloric acid ($ClO_4$) 2.27 %, polyoxyethylene dodecylamine 8.41 %, glycerin mono-12-hydroxystearate 3.69 % and water (including crystal water) 11.39 %. The proportions of the respective formulated materials based on 100 parts of $Sb_2O_5$ are shown in Table 2.

The flame retardant had an average particle size of 13 $\mu$m. The flame retardant was evaluated in the same manner as in Example 1. The results are shown in Table 3.

### Example 12

To 826 g of the antimony pentoxide sol with particle sizes of 40 to 70 x $10^{-3}$ $\mu$m ($Sb_2O_5$ 20.1 %, $Na_2O$ 1.43 % and $Na_2O/Sb_2O_5$ molar ratio: 0.37) was added 24.4 g of 93 % sodium hydroxide, and the mixture was stirred at 70 °C for one hour. After cooling to room temperature, 10.0 g of basic zinc carbonate was added, and the mixture was stirred for 30 minutes. Then, 15.1 g of the same perchlorate of polyoxyethylene dodecylamine as in Example 8, and further 7.5 g of the same sorbitane stearate as in Example 10 and 7.5 g of isopropanol as the solubilizing agent for the sorbitane stearate were added, and the mixture was stirred for 20 minutes. Finally, 7.9 g of zinc benzoate was added, followed by stirring for one hour.

The slurry obtained was similar to that in Example 1. The slurry had a pH of 10.2 and a viscosity of 780 c.p.

The slurry was dried according to the same method as in Example 1 to obtain a powdery flame retardant.

The flame retardant was found to have a composition of antimony pentoxide ($Sb_2O_5$) 62.19 %, $Na_2O$ 11.01 %, basic zinc carbonate 3.75 %, zinc benzoate 2.96 %, perchloric acid ($ClO_4$) 1.53 %, polyoxyethylene dodecylamine 4.12 %, sorbitane stearate 2.81 % and water (including crystal water) 11.63 %. The proportions of the respective formulated materials based on 100 parts of $Sb_2O_5$ are shown in Table 2.

The flame retardant had an average particle size of 13 $\mu$m. The flame retardant was evaluated in the same manner as in Example 1. The results are shown in Table 3.

### Example 13

To 826 g of the same antimony pentoxide sol as in Example 11 was added 24.4 g of 93 % sodium hydroxide, and the mixture was stirred at 70 °C for one hour. Then, at the same temperature, 10.0 g of basic zinc carbonate was added, and the mixture was stirred for 30 minutes. Then, 7.5 g of the same perchlorate of polyoxyethylene dodecylamine as in Example 8, and further 7.5 g of the same sorbitane stearate as in Example 10 and 7.5 g of isopropanol as the solubilizing agent for the sorbitane stearate were added, and the mixture was stirred for 20 minutes. Finally, 7.9 g of zinc benzoate was added, followed by stirring for one hour.

The slurry obtained was similar to that in Example 1. The slurry had a pH of 10.2 and a viscosity of 780 c.p.

The slurry was dried according to the same method as in Example 1 to obtain a powdery flame retardant.

The flame retardant was found to have a composition of antimony pentoxide ($Sb_2O_5$) 64.42 %, $Na_2O$ 11.41 %, basic zinc carbonate 3.88 %, zinc benzoate 3.07 %, perchloric acid ($ClO_4$) 0.77 %, polyoxyethylene dodecylamine 2.12 %, sorbitane stearate 2.91 % and water (including crystal water) 11.84 %. The proportions of the respective formulated materials based on 100 parts of $Sb_2O_5$ are shown in Table 2.

The flame retardant obtained had an average particle size of 13$\mu$m. The flame retardant was evaluated in the same manner as in Example 1. The results are shown in Table 3.

Example 14

To 826 g of the same antimony pentoxide sol as in Example 11 was added 24.4 g of 93 % sodium hydroxide, and the mixture was stirred at 70 °C for one hour. Then, at the same temperature, 10.0 g of basic zinc carbonate was added, and the mixture was stirred for 30 minutes. Then, 8.72 g of 70 % perchloric acid, and further 7.5 g of the same sorbitane stearate as in Example 10 and 7.5 g of isopropanol as the solubilizing agent for the sorbitane stearate were added, and the mixture was stirred for 20 minutes. Finally, 7.9 g of zinc benzoate was added, followed by stirring for one hour.

The slurry obtained was similar to that in Example 1. The slurry had a pH of 9.5 and a viscosity of 740 c.p.

The slurry was dried according to the same method as in Example 1 to obtain a powdery flame retardant.

The flame retardant was found to have a composition of antimony pentoxide ($Sb_2O_5$) 64.77 %, $Na_2O$ 11.47 %, basic zinc carbonate 3.90 %, zinc benzoate 3.08 %, perchloric acid ($ClO_4$) 2.36 %, sorbitane stearate 2.93 % and water (including crystal water) 11.51 %. The proportions of the respective formulated materials based on 100 parts of $Sb_2O_5$ are shown in Table 2.

The flame retardant obtained had an average particle size of 13$\mu$m. The flame retardant was evaluated in the same manner as in Example 1. The results are shown in Table 3.

Comparative example 1

To 1500 g of the same antimony pentoxide sol as in Example 5 was added 20.5 g of 93 % sodium hydroxide, and the mixture was stirred at 85 °C for one hour. After cooling, 42.4 g of 20 % $NaClO_4$ was added and, after stirring for 30 minutes, further 0.88 g of the same polyoxyethylene dodecylamine as in Example 1 was added, followed by stirring for 30 minutes.

The slurry obtained was similar to that obtained in Example 1. The slurry had a pH of 8.5 and a viscosity of 340 c.p. The slurry was dried according to the same method as in Example 1 to obtain a powdery flame retardant.

The flame retardant was found to have a composition of antimony pentoxide ($Sb_2O_5$) 72.9 %, $Na_2O$ 11.0 %, perchloric acid ($ClO_4$) 2.6 %, polyoxyethylene dodecylamine 0.3 % and water (including crystal water) 13.0 %.

The proportions of the respective formulated materials based on 100 parts by weight of $Sb_2O_5$ are shown in Table 2.

The flame retardant obtained had an average particle size of 15 $\mu$m. The flame retardant was evaluated in the same manner as in Example 1. The results are shown in Table 3.

Comparative example 2

To 1500 g of an antimony pentoxide sol prepared in the same manner as in Example 1 (specific gravity: 1.145, pH: 1.90, viscosity: 4.5 c.p., $Sb_2O_5$ 13.1 %, $Na_2O$ 0.5 %, $Na_2O/Sb_2O_5$ molar ratio: 0.20, and particle size: 20 to 40 x $10^{-3}$ $\mu$m) was added 42.4 g of 20 % $NaClO_4$ and, after stirring for 30 minutes, 25.6 g of the same polyoxyethylene dodecylamine as in Example 1 was added, followed by stirring for 30 minutes.

The slurry obtained was similar to that obtained in Example 1. The slurry had a pH of 6.5 and a viscosity of 310 c.p. The slurry was dried according to the same method as in Example 1 to obtain a powdery flame retardant.

The flame retardant was found to have a composition of antimony pentoxide ($Sb_2O_5$) 72.4 %, $Na_2O$ 3.57 %, perchloric acid ($ClO_4$) 2.54 %, polyoxyethylene dodecylamine 9.43 % and water (including crystal water) 12.06 %.

The proportions of the respective formulated materials based on 100 parts by weight of $Sb_2O_5$ are shown in Table 2.

The flame retardant obtained had an average particle size of 12 $\mu$m. The flame retardant was evaluated in the same manner as in Example 1. The results are shown in Table 3.

Comparative example 3

To 1500 g of an antimony pentoxide sol as in Example 4 was added 21.3 g of 93 % sodium hydroxide, and the mixture was stirred at 85 °C for one hour. After cooling, 1.2 g of 20 % $NaClO_4$ was added and, after stirring for 30 minutes, further 25.6 g of the same polyoxyethylene dodecylamine was added, followed by stirring for 30 minutes.

The slurry obtained was similar to that obtained in Example 1. The slurry had a pH of 8.7 and a viscosity of 330 c.p. The slurry was uniformized under stirring and dried by a spray dryer to obtain a powdery flame retardant.

The flame retardant was found to have a composition of antimony pentoxide ($Sb_2O_5$) 69.0 %, $Na_2O$ 10.58 %, perchloric acid ($ClO_4$) 0.069 %, polyoxyethylene dodecylamine 8.99 % and water (including crystal water) 11.36 %.

The proportions of the respective formulated materials based on 100 parts by weight of $Sb_2O_5$ are shown in Table 2.

The flame retardant obtained had an average particle size of 12 $\mu$m. The flame retardant was evaluated in the same manner as in Example 1. The results are shown in Table 3.

## Table 2

Composition of flame retardant (based on 100 parts by weight of $Sb_2O_5$)

| | Example | | | | | | | |
|---|---|---|---|---|---|---|---|---|
| | 1 | 2 | 3 | 4 | 5 | 6 | 7 | 8 |
| $Sb_2O_5$ | 100 | 100 | 100 | 100 | 100 | 100 | 100 | 100 |
| $Na_2O$ | 13.4 | 14.4 | 15.3 | 15.3 | 14.6 | 13.4 | 19.2 | 13.4 |
| $K_2O$ | — | — | — | — | — | 5.8 | — | — |
| $ClO_4$ | 3.5 | 3.5 | 5.3 | 3.5 | 3.5 | 3.5 | 3.5 | 3.5 |
| Polyoxyethylene dodecylamine | 13.0 | 8.0 | 30.0 | — | 13.0 | — | 13.0 | 13.0 |
| Polyoxyethylene tallow alkylamine | — | — | — | 16.5 | — | 16.5 | — | — |
| Sorbitane stearate | — | — | — | — | 5.7 | — | — | — |
| $H_2O$ (containing crystal water) | 16.9 | 16.4 | 20.6 | 17.6 | 17.6 | 18.5 | 17.9 | 16.9 |
| Average grain diameter of starting sol (electron microscope) x $10^{-3}$ μm | 20-40 | 40-60 | 5-15 | 20-40 | 20-40 | 20-40 | 20-40 | 20-40 |

EP 0 330 411 B1

EP 0 330 411 B1

Table 2 (Contd.)

| | Example | | | | | | Comparative example | | |
|---|---|---|---|---|---|---|---|---|---|
| | 9 | 10 | 11 | 12 | 13 | 14 | 1 | 2 | 3 |
| $Sb_2O_5$ | 100 | 100 | 100 | 100 | 100 | 100 | 100 | 100 | 100 |
| $Na_2O$ | 14.4 | 15.3 | 14.6 | 17.7 | 17.8 | 17.7 | 15.2 | 4.9 | 15.3 |
| $K_2O$ | — | — | — | — | — | — | — | — | — |
| $ClO_4$ | 3.5 | 5.3 | 3.5 | 2.5 | 1.2 | 3.6 | 3.6 | 3.5 | 0.1 |
| Polyoxyethylene dodecylamine | 9.5 | 30.0 | 13.0 | 6.6 | 3.3 | — | 0.4 | 13.0 | 13.0 |
| Basic zinc carbonate | — | — | — | 6.0 | 6.0 | 6.0 | — | — | — |
| Zinc benzoate | — | — | — | 4.8 | 4.8 | 4.8 | — | — | — |
| Sorbitane stearate | — | — | — | 4.5 | 4.5 | 4.5 | — | — | — |
| Glycerin mono-12-hydroxystearate | — | — | 5.7 | — | — | — | — | — | — |
| $H_2O$ (containing crystal water) | 17.3 | 20.5 | 17.6 | 18.7 | 18.4 | 17.8 | 18.0 | 16.9 | 16.5 |
| Average grain diameter of starting sol (electron microscope) x $10^{-3}$ μm | 40-60 | 5-15 | 20-40 | 40-70 | 40-70 | 40-70 | 20-40 | 20-40 | 20-40 |

## Table 3

### Evaluation results

| | Example | | | | | | | |
|---|---|---|---|---|---|---|---|---|
| | 1 | 2 | 3 | 4 | 5 | 6 | 7 | 8 |
| Thermal stability 185°C darkening time (min) | 180 | 180 | 150 | 180 | 180 | 180 | 180 | 180 |
| Initial coloring YI | 11.0 | 8.9 | 13.1 | 12.0 | 9.5 | 10.4 | 10.1 | 11.0 |
| Transparency L % | 82 | 74 | 87 | 75 | 73 | 80 | 80 | 82 |
| Bleeding property | ○ | ○ | ○ | ○ | ○ | ○ | ○ | ○ |
| Thermal durability extension residual % | 89 | 91 | 73 | 93 | 88 | 90 | 90 | 89 |
| Weather resistance extension residual % | 70 | 72 | 65 | 70 | 72 | 64 | 70 | 70 |
| MVSS-302 mm/min | 35 | 70 | 32 | 38 | 47 | 40 | 34 | 35 |
| Oxygen index | 29.8 | 29.2 | 30.3 | 29.8 | 29.4 | 29.4 | 29.5 | 29.8 |

Table 3 (Contd.)

| | Example | | | | | | Comparative example | | |
|---|---|---|---|---|---|---|---|---|---|
| | 9 | 10 | 11 | 12 | 13 | 14 | 1 | 2 | 3 |
| Thermal stability 185°C darkening time (min) | 180 | 150 | 180 | 140 | 140 | 140 | 135 | 120 | 75 |
| Initial coloring YI | 8.9 | 13.1 | 9.5 | 13.0 | 13.0 | 12.8 | 13.4 | 15.7 | 19.8 |
| Transparency L % | 74 | 87 | 73 | 61.5 | 62 | 60 | 54 | 76 | 72 |
| Bleeding property | ○ | ○ | ○ | ○ | ○ | ○ | x | △ | x |
| Thermal durability extension residual % | 91 | 73 | 88 | 88 | 85 | 89 | 75 | 65 | 34 |
| Weather resistance extension residual % | 72 | 65 | 72 | 69 | 65 | 70 | 64 | 60 | 15 |
| MVSS-302 mm/min | 70 | 32 | 47 | 69 | 70 | 70 | 120 | 45 | 64 |
| Oxygen index | 29.2 | 30.3 | 29.4 | 29.4 | 29.4 | 29.3 | 27.6 | 29.2 | 29.2 |

## Claims

1. A powdery flame retardant for halogen-containing vinyl resins, containing a dried antimony pentoxide sol having the formula $Sb_2O_5 \cdot (Na_2O)x \cdot nH_2O$ wherein x is 0 to 0.4 and n is 2 to 4, which has primary particle sizes of 5-100 nm, characterized in further containing, with respect to 100 parts by weight

$Sb_2O_5$:

- (A) 5 to 30 parts by weight of at least one compound of lithium, sodium or potassium, calculated as oxide $M_2O$ wherein M represents the alkali metal, or of a mixture thereof with a soluble hydroxide of an alkaline earth metal and zinc, lead or a salt of zinc or lead;
- (B) 0.2 to 10 parts by weight of a perchloric acid compound; and
- (C) 1 to 50 parts by weight of a hydrophobic dispersing agent having a boiling point or decomposition temperature of at least 200°C.

2. A flame retardant for halogen-containing vinyl resin according to Claim 1, wherein the alkali metal compounds are hydroxides or carbonates of the alkali metals.

3. A flame retardant for halogen-containing vinyl resin according to Claim 1 or Claim 2 wherein the perchloric acid compound is at least one compound selected from perchloric acid, sodium perchlorate, potassium perchlorate, amine perchlorate, ammonium perchlorate, magnesium perchlorate, lithium perchlorate, barium perchlorate, strontium perchlorate, lead perchlorate, cesium perchlorate and rubidium perchlorate.

4. A flame retardant for halogen-containing vinyl resin according to Claims 1, 2 or 3 wherein the hydrophobic dispersing agent is at least one compound selected from a hydrophobic amine compound, a higher fatty acid having 12 or more of carbon atoms, an ester of the fatty acid, an ether of the fatty acid, an amide of the fatty acid and a phosphate of an ether type nonionic surfactant.

5. A flame retardant for halogen-containing vinyl resin according to Claim 4, wherein the hydrophobic amine is at least one compound selected from aliphatic amines or aromatic amines having a boiling point or decomposition point temperature of 200°C or higher or amine type surfactants, ethoxylated with 1.5 moles ethylene oxide.

6. A flame retardant for halogen-containing vinyl resin according to Claim 4, wherein the higher fatty acid having 12 or more carbon atoms, or the ester, the ether or the amide of the fatty acid is at least one compound selected from a sorbitan fatty acid ester, a fatty acid ester of neopentyl polyol, a glycerine fatty acid ester and a fatty acid monoamide of neopentyl polyol.

7. A flame retardant for halogen-containing vinyl resin according to Claim 4, wherein the phosphate of the ether type nonionic surfactant is at least one compound selected from a polyoxyethylene adduct of a mono- or dialkyl phosphate, a mono- or diaryl phosphate, and a mono- or dialkylaryl phosphate.

**Patentansprüche**

1. Flammschutzmittel für halogenhaltige Vinylharze, enthaltend ein getrocknetes Antimon- Pentoxidsol der Formel $Sb_2O_5$ $(Na_2O)x.nH_2O$,

wobei x zwischen 0 und 0.4 und n zwischen 2 bis 4 liegt, mit ursprünglichen Teilchengrößen zwischen 5 bis 100 nm, gekennzeichnet durch einen weiteren Inhalt in Bezug auf 100 Gewichtsteile $Sb_2O_5$:

- (A) 5 bis 30 Gewichtsanteile wenigstens eines der Elemente Lithium, Natrium oder Kaiium, berechnet als Oxid $M_2O$, wobei M das Alkalimetall darstellt, oder einer Mischung hiervon mit einem löslichen Hydroxid eines seltenen Erde- Metalls und Zink, Blei oder eines Salzes von Zink oder Blei;
- (B) 0,2 bis 10 Gewichtsanteile Perchlorsäure; und
- (C) 1 bis 50 Gewichtsanteile eines hydrophoben Dispersionsmittels mit einem Siedepunkt oder einer Zersetzungstemperatur von mindestens 200°C.

2. Flammschutzmittel für halogenhaltige Vinylharze gemäß Anspruch 1, wobei die Alkalimetallkomponenten Hydroxide oder Karbonate von Alkalimetallen sind.

3. Flammschutzmittel für halogenhaltige Vinylharze gemäß Anspruch 1 oder 2, wobei der Perchlorsäureanteil wenigstens ein Anteil aus der Gruppe der Perchlorsäure, Natriumperchlorat, Kaliumperchlorat, Aminperchlorat, Ammoniumperchlorat, Magnesiumperchlorat, Lithiumperchlorat, Bariumperchlorat, Strontiumperchlorat, Bleiperchlorat, Cäsiumperchlorat und Rubidiumperchlorat ist.

EP 0 330 411 B1

**4.** Flammschutzmittel für halogenhaltige Vinylharze gemäß den Ansprüchen 1, 2 oder 3, wobei das hydrophobe Dispersionsmittel wenigstens ein Element aus der Gruppe der hydrophoben Amine, eine höhere Fettsäure mit zwölf oder mehr Kohlenstoffatomen, ein Ester einer Fettsäure, ein Ether einer Fettsäure, ein Amid einer Fettsäure und ein Phosphat eines etherförmigen nicht- ionischen Tensids ist.

**5.** Flammschutzmittel für halogenhaltige Vinylharze gemäß Anspruch 4, wobei das hydrophobe Amin wenigstens ein Element aus der Gruppe der aliphatischen Amine oder aromatischen Amine mit einem Siedepunkt oder einer Zersetzungstemperatur von 200°C oder höher oder ein aminartiges Tensid ist, das mit 1-5 Mol Ethylenoxid ethoxyliert wurde.

**6.** Flammschutzmittel für halogenhaltige Vinylharze gemäß Anspruch 4, wobei die höhere Fettsäure mit zwölf oder mehr Kohlenstoffatomen, oder der Ester, der Ether oder das Amid der Fettsäure wenigstens ein Element aus der Gruppe von Sorbitanfettsäureester, Fettsäureester aus Neopentylpolyol, Glyzerinfettsäureester und Fettsäuremonoamid aus Neopentylpolyol ist.

**7.** Flammschutzmittel für halogenhaltige Vinylharze gemäß Anspruch 4, wobei das Phosphat des etherartigen nicht- ionischen Tensids wenigstens ein Element aus der Gruppe eines Polyoxyethylen- Adduktes eines Mono- oder Dialkylphosphates, eines Mono- oder Diarylphosphates und eines Mono- oder Dialkylarylphosphates ist.

**Revendications**

**1.** Retardateur de flamme en poudre pour résines vinyliques contenant un halogène, contenant un sol de pentoxyde d'antimoine séché de formule $Sb_2O_5$ $(Na_2O)x.nH_2O$

où x vaut de 0 à 0,4 et n vaut de 2 à 4, retardateur présentant des dimensions de particules principales de 5-100 nm, caractérisé en ce qu'il contient en outre, pour 100 parties en poids de $Sb_2O_5$:
- (A) 5 à 30 parties en poids d'au moins un composé du lithium, du sodium ou du potassium, calculé comme oxyde $M_2O$ où M représente le métal alcalin ou son mélange avec un hydroxyde soluble d'un métal alcalino-terreux et le zinc, le plomb ou un sel de zinc ou de plomb;
- (B) 0,2 à 10 parties en poids d'un composé de l'acide perchlorique; et
- (C) 1 à 50 parties en poids d'un agent dispersant hydrophobe présentant un point d'ébullition ou une température de décomposition d'au moins 200°C.

**2.** Retardateur de flamme pour résines vinyliques contenant un halogène selon la revendication 1, dans lequel les composés du métal alcalin sont des hydroxydes ou des carbonates des métaux alcalins.

**3.** Retardateur de flamme pour résines vinyliques contenant un halogène selon la revendication 1 ou la revendication 2, dans lequel le composé de l'acide perchlorique est au moins un composé choisi parmi l'acide perchlorique, le perchlorate de sodium, le perchlorate de potassium, un perchlorate d'amine, le perchlorate d'ammonium, le perchlorate de magnésium, le perchlorate de lithium, le perchlorate de baryum, le perchlorate de strontium, le perchlorate de plomb, le perchlorate de césium et le perchlorate de rubidium.

**4.** Retardateur de flamme pour résines vinyliques contenant un halogène selon les revendications 1, 2 ou 3, dans lequel l'agent dispersant hydrophobe est au moins un composé choisi parmi un composé d'amine hydrophobe, un acide gras d'ordre supérieur présentant 12 atomes de carbone ou plus, un ester d'acide gras, un éther d'acide gras, un amide d'acide gras et un phosphate d'un agent tensioactif non ionique de type éther.

**5.** Retardateur de flamme pour résines vinyliques contenant un halogène selon la revendication 4, dans lequel l'amine hydrophobe est au moins un composé choisi parmi les amines aliphatiques ou les amines aromatiques présentant un point d'ébullition ou une température du point de décomposition de 200°C ou plus ou bien des agents tensioactifs de type amine éthoxylés avec 1-5 moles d'éthylèneoxyde.

**6.** Retardateur de flamme pour résines vinyliques contenant un halogène selon la revendication 4, dans lequel l'acide gras d'ordre supérieur présentant 12 atomes de carbone ou plus, ou l'ester, l'éther ou l'amide de l'aide gras est au moins un composé choisi parmi un ester d'acide gras de sorbitanne, un

19

ester d'acide gras de néopentylpolyol, un ester d'acide gras de glycérine et un monoamide d'acide gras de néopentylpolyol.

7. Retardateur de flamme pour résines vinyliques contenant un halogène selon la revendication 4, dans lequel le phosphate de l'agent tensioactif non ionique de type éther est au moins un composé choisi parmi un produit d'addition du polyoxyéthylène d'un mono- ou dialcoylphosphate, d'un mono- ou diarylphosphate et d'un mono- ou dialcoylarylphosphate.